# EUROPÄISCHE PATENTANMELDUNG

(11) **EP 1 320 055 A1**
(43) Veröffentlichungstag der Anmeldung: **18.06.2003**
(21) Anmeldenummer: 02026715.9
(22) Anmeldetag: 30.11.2002
(51) Int. Cl.: G06F 17/60

(54) **Verfahren und System zur Bereitstellung produktspezifischer Daten in einer Servicestation**

(30) Priorität: 14.12.2001 DE 10161608
(71) Anmelder: MAN Nutzfahrzeuge Aktiengesellschaft, 80976 München (DE)
(72) Erfinder: Schmitt, Martin, Dipl.-Ing. (FH), 80933 München (DE); Hohndorf, Maik, Dipl.-Ing. (FH), 81249 München (DE); Gesele, Eberhard, Dipl.-Ing. (FH), 85229 Markt Indersdorf (DE); Pilous, Uwe, 86343 Königrbrunn (DE); Lewald, Stefan, Dipl.-Ing., 85757 Karlsfeld (DE); Lindinger, Armin, Dipl.-Ing., 85244 Röhrmoos (DE); Schuller, Theo, Dipl.-Ing. (FH), 84032 Altdorf (DE); Peter, Martin, Dipl.-Ing., 85250 Asbach-Altomünster (DE)

(57) **Zusammenfassung**

Ein Verfahren und ein System zur Bereitstellung produktspezifischer Daten in einer Servicestation zur Erkennung und etwaigen Änderung von Bau- und Funktionszuständen an von einem Hersteller ausgelieferten Produkten, mit
- einer zentralen Speicherung und Bereitstellung von Ausstattungsdaten für Produktkomponenten aller Produkttypen und deren unterschiedlichen Varianten in einer zentralen Datenbank 1, wobei die Ausstattungsdaten durch den Hersteller aktualisiert werden,
- einer Archivierung der individuellen Ausstattungsdaten des jeweils ausgelieferten Produkts in einem eigenen, mittels eines dem Produkt zugeordneten Identifizierungscodes abrufbaren Datenfile 2 in einem Archivspeicher 3, wobei
- mittels eines rechnergestützt ablaufenden Programms 4, das zwischen der zentralen Datenbank 1 und dem Archivspeicher 3 kommuniziert, im Archivspeicher 3 neue oder geänderte Datenfiles 2 abgelegt werden, und
- wenigstens einer in einer Servicestation 6 vorhandenen Benutzerschnittstelle 5 zum Abrufen des dem jeweiligen Produkt 7 zugeordneten Datenfiles 2 aus dem Archivspeicher 3 und Erkennen des Ist-Zustands des mittels Datenübertragung an die Benutzerschnittstelle angeschlossenen Produktes für etwaige am Produkt 7 durchzuführende Änderungen.

## Beschreibung

Die Erfindung betrifft ein Verfahren und ein System zur Bereitstellung produktspezifischer Daten zur Erkennung und etwaigen Änderung von Bau- und Funktionszuständen an von einem Hersteller ausgelieferten Produkten mit komplexem Aufbau und ausgeprägter Variantenvielfalt.

Bei Produkten einer Produktreihe mit ausgeprägter Variantenvielfalt und kundenspezifischen Einzelmerkmalen, d.h. bei Produkten, die jeweilige Unikate darstellen, ergibt sich aufgrund des ständig wachsenden Umfangs und der steigenden Komplexität der im jeweiligen Produkt verbauten mechanischen und elektronischen Produktkomponenten für den Hersteller nicht nur bei der Fertigung, sondern vor allem nach der Auslieferung des Produkts die Schwierigkeit, eine einwandfreie Funktion und Qualitätssicherung während der gesamten Lebensdauer des ausgelieferten Produkts sicherzustellen. Hinzu kommt, dass kundenspezifische Anpassungen und Änderungen oder Umrüstungen des Produkt-Bauzustandes nach der Auslieferung zu individuellen Bauausführungen mit spezifischen Funktionalitäten führen, die das ausgelieferte Produkt innerhalb seines vorgesehenen Einsatzgebietes zu einem neuen Unikat werden lassen, dessen neue Konfiguration dem Hersteller des ursprünglichen Produkts möglicherweise nicht bekannt ist und/oder nicht bekannt gegeben wurde.

Aufgabe der Erfindung ist es daher, ein Verfahren und ein System der eingangs genannten Art zu schaffen, durch welche die Funktionalität und Qualität der ausgelieferten Produkte während deren gesamter Lebensdauer gewährleistbar ist.

Diese Aufgabe wird erfindungsgemäß durch ein Verfahren gemäß den Merkmalen des Patentanspruches 1 und durch ein System gemäß den Merkmalen des Patentanspruches 12 gelöst.

Die bei der Kennzeichnung und Erläuterung der Erfindung verwendeten Begriffe haben folgende Bedeutungsinhalte:

Produkt : Ein Unikat mit komplexem Aufbau und komplexer Konfiguration, dessen Komponenten aus einer Vielzahl möglicher Varianten, die der Hersteller anbietet, ausgewählt sind;

Produktkomponenten : Komponenten, aus denen der komplexe Aufbau des Produktes zusammengesetzt ist;

Aktualisierung : Die vom Hersteller geprüfte und freigegebene Anpassung/Änderung/Ergänzung der Produktkomponenten in Abhängigkeit von den neuesten Erkenntnissen aus der Forschung und Entwicklung zur Verbesserung und weiteren Sicherstellung der Funktionalität und Qualität des Produkts;

Wartung : Instandhaltung und -setzung, Reparatur, Qualitätssicherung und -verbesserung des Produkts (Unikats);

Betreuung : Eine oder mehrere der folgenden Tätigkeiten am Produkt (Unikat):
- Feststellung des Ist-Zustandes eines Produktes,
- Wartung eines Produkts,
- Änderung am Produkt,
- Neueinstellung am Produkt,
- Schaffung eines neuen Ist-Zustandes am Produkt, insbesondere aufgrund eines vorgegebenen neuen Soll-Zustandes,
- Neukonfiguration des Produkts;

Ausstattungsdaten : Daten der Ausstattungsvarianten der einzelnen Produktkomponenten für die verschiedenen Produkte;

Datenfile : Die Beschreibung des Bauzustandes sowie der verbauten Hardware, Software, Funktionalitäten und Einzeleinstellungen von Produktkomponenten, insbesondere Elektronikkomponenten in einer Datei als Datensammlung;

Programm : Ein rechnergestützt ablaufendes Programm zur Erzeugung von nur vom Hersteller geprüften und für den Serieneinsatz freigegebenen Daten für Produktkomponenten;

Zentrale Datenbank : Eine Datenbank zur Speicherung zumindest der aktualisierten Ausstattungsdaten des Herstellers;

Archivspeicher : Speicher zur Archivierung der Datenfiles für jedes ausgelieferte Produkt mit ständiger Dokumentation der am jeweiligen Produkt vorgenommenen Änderungen;

Servicestation : Mobile oder immobile Station zur Betreuung des Produktes;

Benutzerschnittstelle : Elektronische Einrichtung, beispielsweise PC, Laptop, Notebook oder dergleichen, welches mit dem Archivspeicher mittels Telekommunikation verbindbar ist.

Bei der Erfindung kommt eine zentrale Datenbank zur Speicherung von Ausstattungsdaten für unterschiedliche Produkte zum Einsatz, wobei die Ausstattungsdaten ständig durch den Hersteller aktualisiert werden. Bei der Aktualisierung der Ausstattungsdaten werden Verbesserungen an der Ausstattung der Produktkomponenten in der Datenbank ständig neu aufgenommen. Hierdurch wird für die Ausstattung der verschiedenen Produkte im Hinblick auf Qualität und Funktionalität der von der Entwicklung erreichte und vom Hersteller freigegebene bestmögliche Ausstattungsstandard in Bereitschaft gehalten.

Ferner kommt ein Archivspeicher zum Einsatz, in welchem für das jeweils ausgelieferte Produkt mindestens ein Datenfile archiviert wird, das mittels eines dem Produkt zugeordneten Identifikationscodes aufrufbar ist. Ein Datenfile enthält die individuellen Ausstattungsdaten, welche am ausgelieferten Produkt (Unikat) vorhanden sind oder waren.

Mit dem Archivspeicher kann eine Benutzerschnittstelle oder können mehrere Benutzerschnittstellen, welche einer oder mehreren Servicestationen zugeordnet sind, vorzugsweise über Telekommunikation, beispielsweise Netzwerkverbindung bei der Betreuung eines Produkts in Verbindung treten. Dieselbe Benutzerschnittstelle kann vorzugsweise mittels Telekommunikation, beispielsweise Funkverbindung mit dem Produkt, mittels eines auch am Produkt angebrachten Umsetzers, in Verbindung treten. Hierzu kann der Inhalt des im Archivspeicher abgelegten Datenfiles, welches zu dem zu wartenden Produkt gehört, abgerufen und beispielsweise an einem Bildschirm oder anderem Ausgabegerät erkennbar gemacht werden. Die im Datenfile enthaltenen Dokumentationen können auch auf andere Art und Weise durch eine graphische Benutzerschnittstelle visualisiert und bereitgestellt werden. Man erreicht hierdurch auf einfache Weise die Darstellung und Verfügbarkeit der zur Betreuung des Produkt erforderlichen Daten. Die Datenfiles können in aufeinanderfolgenden Datenfile-Versionen sämtliche Entwicklungs- und Aufbaustufen des Produkts umfassen und zeigen somit den aktuellen Bauzustand als Ausgangsbasis für weitere kundenspezifische Anpassungen, Änderungen oder Umrüstungen des Bauzustands. Die am Produkt vorgenommenen Änderungen werden über die Benutzerschnittstelle in den Archivspeicher übertragen und dort gespeichert.

Für die Änderungen am Produkt werden der Benutzerschnittstelle der jeweiligen Servicestation die aktualisierten Ausstattungsdaten bezogen auf das Produkt zur Verfügung gestellt. Bei jeder durchzuführenden Arbeit werden somit die neusten Erkenntnisse des Herstellers bezüglich der verbauten Produktkomponenten und deren Funktionalitäten vermittelt. Beispielsweise bei der Wartung des Produkts fließen Verbesserungen als Ergebnis der kontinuierlichen Produktentwicklung des Herstellers in die Wartungsarbeiten mit ein. Die Verbesserungen betreffen alle Produktkomponenten und Einstellungen bestimmter Komponenten und nicht nur die zur wartenden oder zu reparierenden Produktkomponenten. Bei der Wartung können daher vorhandene noch funktionstüchtige Produktkomponenten durch neue Produktkomponenten, welche den aktualisierten, insbesondere verbesserten Standard aufweisen, ausgetauscht werden. Wie oben schon erläutert, werden alle Änderungen am Produkt in den Archivspeicher übertragen um dann dem zugehörigen Datenfile für die fortlaufende Dokumentation zugeordnet zu werden. Die Wartung stellt aber nur eine von mehreren Arten der Betreuung des Produkts dar.

Gestützt durch den Archivspeicher erreicht man eine Versorgung der jeweiligen Servicestationen mit produktspezifischen Daten betreffend Funktionserweiterungen und -änderungen oder Austausch von Software- und/oder Hardwarekomponenten des Produkts. Durch das von der Erfindung geschaffene zentrale System ist der Hersteller des Produkts in der Lage, während der gesamten Lebensdauer des Produkts eine ständige Qualitätssicherung der eingesetzten Produktkomponenten, insbesondere Hardware- oder Softwarekomponenten zu gewährleisten. Am Produkt werden immer nur vom Hersteller geprüfte und freigegebene Komponenten eingesetzt. Abweichungen von dem zulässigen Zustand können erfasst und korrigiert werden.

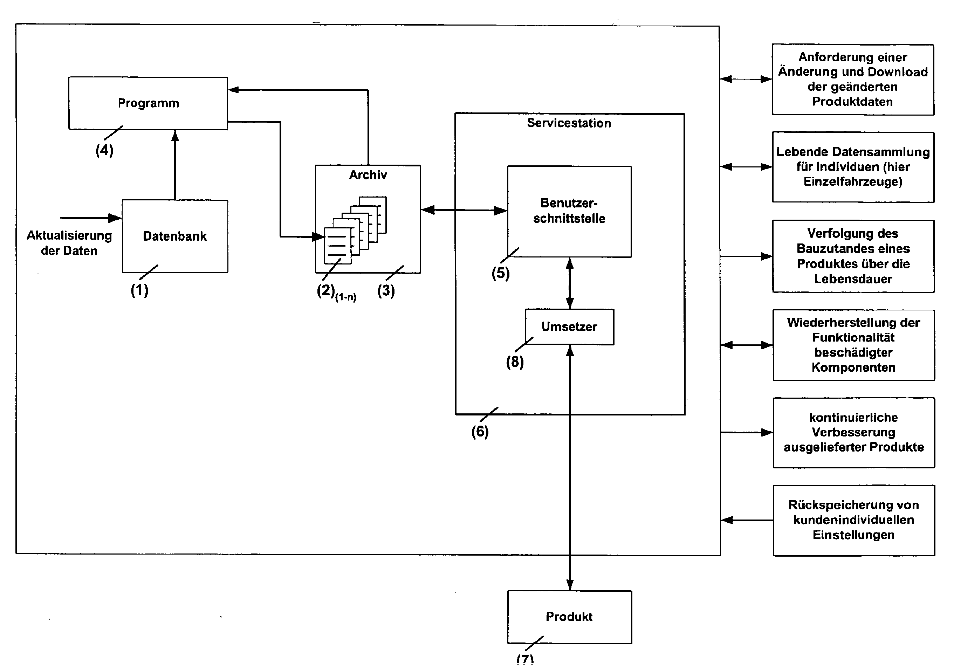

Anhand der Figur, welche im Blockschaltbild ein Ausführungsbeispiel darstellt, wird die Erfindung noch näher erläutert.

Das in der Figur dargestellte System beinhaltet eine Datenbank 1, in welcher Ausstattungsdaten für unterschiedliche Produkttypen zentral gespeichert sind. Die Ausstattungsdaten werden ständig durch den Hersteller in Abhängigkeit von in Forschung und Entwicklung erzielten Verbesserungen aktualisiert. Bei der Herstellung eines Produktes, beispielsweise eines Nutzfahrzeuges, werden in Abhängigkeit von einem Montageauftrag per Programm, z.B. einem rechnergestützt ablaufendem Programm 4, die Daten der Produktkomponenten mit den entsprechenden Ausstattungsvarianten zusammengestellt und in einem Datenfile 2 festgehalten.

Der Montageauftrag beschreibt nur den Auslieferungszustand und Lieferumfang des Produktes. Um eine kontinuierliche Qualitätssicherung zu erreichen, ist es jedoch erforderlich, dass der Bauzustand und die Beschreibung der verbauten Hardware/Software sowie die Funktionalitäten und Einzeleinstellungen der Produktkomponenten, insbesondere der Elektronikkomponenten über die gesamte Lebensdauer des Produkts hin erfasst werden. Zur Bildung einer derartigen "lebendigen" Datensammlung wird das dem ausgelieferten Produkt zugeordnete Datenfile 2 in einem Archivspeicher 3 gespeichert. Auf die im Archivspeicher 3 archivierten Datenfiles, welche den jeweiligen Produkten zugeordnet sind, haben eine oder mehrere Servicestationen 6 bei der Betreuung des Produktes über eine oder mehrere Benutzerschnittstellen 5 Zugriff. Jede Servicestation 6 kann eine oder mehrere Benutzerschnittstellen 5 aufweisen. Die Benutzerschnittstelle 5 kann als PC, als Notebook, Laptop oder dergleichen ausgebildet sein und per Telekommunikation mit dem Archivspeicher 3.in Verbindung treten.

Auf diese Weise ist es möglich, kundenspezifische Anpassungen, Änderungen oder Umrüstungen des Produktes, welche in der Servicestation 6 durchgeführt werden, datums- und zeitmäßig geordnet, im Archivspeicher 3 abzulegen. Diese neuen Daten werden im Archivspeicher 3 dem bestehenden Datenfile 2 des betreffenden Produktes zugeordnet und beim nächsten Durchlauf des rechnergestützten Programms 4 in ein neues Datenfile bzw. eine neue Datenfile-Version integriert. Auf diese Weise entstehen mehrere aufeinanderfolgende Datenfile-Versionen 2₍₁₋ₙ₎, die den historischen Ablauf der Anpassungen, Änderungen oder Umrüstungen wiedergeben. Vor allem bei langlebigen Produkten ist dies vorteilhaft, da die Gefahr des Verlustes der Dokumentation nicht mehr besteht. Da sämtliche Entwicklungsund Aufbaustufen in dem Archivspeicher erfasst sind, kann sich das Servicepersonal mit Hilfe der Benutzerschnittstelle 5 über den aktuellen und verbindlichen aber auch über den historischen Bauzustand des Produktes informieren. Der aktuelle Bauzustand kann beispielsweise an einem Bildschirm visualisiert oder durch eine sonstige Gerätschaft kenntlich gemacht werden. Kundenspezifische Anpassungen sowie Änderungen oder Umrüstungen des Bauzustands, welche sich beispielsweise bei einem Besitzerwechsel des Produktes ergeben, werden über die Benutzerschnittstelle 5 in das Archivspeicher übertragen und dem entsprechenden Datenfile zugeordnet.

Es ist auch möglich, das dem Produkt zugeordnete und beispielsweise über eine Identifikationsnummer aufgerufene Datenfile aus dem Archivspeicher 3 in den Speicher der Benutzerschnittstelle 5 zu laden und Änderungen in den Speicher der Benutzerschnittstelle 5 einzugeben, um sie dann z.B. einer beliebig anderen Schnittstelle 5 über den Archivspeicher 3 zur Verfügung zu stellen.

In der Servicestation 6 kann im Rahmen der Betreuung ferner die Funktionalität beschädigter Produktkomponenten wieder hergestellt werden. Auch kann der Tausch von Produktkomponenten durch Ersatzkomponenten initiiert oder unmittelbar durchgeführt werden. Ferner können am Produkt vorhandene Komponenten durch aktualisierte Produktkomponenten ausgetauscht werden. Am Ende jeder ordnungsgemäßen Betreuung ist sichergestellt, dass das Produkt immer den vom Hersteller aktuell gewährleisteten und freigegebenen höchstmöglichen Qualitäts- und Funktionalitätsstandard aufweist.

Aus dem zum Produkt gehörigen Datenfile 2 kann das Servicepersonal feststellen, ob die jeweiligen Produktkomponenten die aktualisierten Ausstattungsvarianten, welche in der Datenbank 1 gespeichert sind, bereits aufweisen. Auf diese Weise kann das Servicepersonal erkennen, ob die aktuellen Ergebnisse der kontinuierlichen Produktentwicklung des Herstellers am Produkt bereits vorhanden sind. Hierdurch sind Verbesserungen des Produkts in allen Bereichen des Produkts einschließlich der Elektronikkomponenten und nicht nur bei den zu wartenden oder reparierenden Komponenten gewährleistet. Es werden hierdurch Qualitätsverbesserungen und/oder günstigere Wirkungsweisen des Produkts gegenüber dem ursprünglichen Produktzustand erreicht, wobei während der gesamten Lebensdauer des Produkts die Ergebnisse der Forschung und Entwicklung des Herstellers durch die Betreuung am Produkt umgesetzt werden.

Bei dem in der Figur dargestellten System ist die jeweilige Schnittstelle 5 der Servicestation bzw. Servicestationen 6 mit dem Archivspeicher 3 verbunden. Die Schnittstelle kann einen Änderungswunsch im Archivspeicher 3 ablegen. Der Archivspeicher 3 übermittelt diese Anforderung an das rechnergestützt ablaufende Programm 4, welches gemäß den in der zentralen Datenbank 1 abgelegten neuesten Erkenntnissen oder Festlegungen (= aktualisierte Ausstattungsdaten) die Anforderung so umsetzt, dass ein neues Datenfile (Datenfile-Version) produziert und im Archivspeicher 3 abgelegt wird. Dieses neue Datenfile (Datenfile-Version) kann dann von jeder anderen Schnittstelle 5 abgerufen werden. Auf diese Weise werden jedem Produkt 7 mehrere zeitlich aufeinanderfolgende, die Historie des Bauzustandes des Produkts dokumentierende Datenfile-Versionen 2₍₁₋ₙ₎ im Archivspeicher 3 abgelegt.

Ein der jeweiligen Benutzerschnittstelle 5 zugeordneter Umsetzer 8 dient zur Herstellung einer datenübertragungstechnischen Verbindung mit dem Produkt 7. Auch am Produkt 7 kann ein Umsetzer zur Durchführung von beispielsweise Einstellungen per Funk oder Telekommunikation vorgesehen sein.

Demzufolge ist durch die Erfindung gewährleistet, dass bei jeder durchzuführenden Betreuung für das betroffene Produkt automatisch dem Servicepersonal der jeweils neueste Entwicklungsstand auf Bestellung über die Benutzerschnittstelle 5 vom Archivspeicher 3 zur Verfügung gestellt wird. Hierdurch erreicht man eine Selbstversorgung der jeweiligen Servicestation mit produktspezifisch angepassten Daten. Dies gewährleistet ein Maximum an Bewegungsfreiheit im Servicealltag, wobei die Bindung an die vom Hersteller freigegebenen und genehmigten Ausstattungsvarianten der Produktkomponenten erreicht wird.

Der Hersteller ist aufgrund der Erfindung in der Lage, während der gesamten Lebensdauer des Produkts eine kontinuierliche Qualitätssicherung der eingesetzten Produktkomponenten (Hardware- und Softwarekomponenten) zu garantieren, da im Produkt immer nur geprüfte und freigegebene Komponenten eingesetzt und zugelassene Zustände realisiert werden. Abweichungen von zulässigen Zuständen können erfasst und gegebenenfalls korrigiert werden.

Beim dem anhand der Figur erläuterten Produkt handelt es sich um ein Nutzfahrzeug. Die Erfindung kann jedoch auch bei anderen Produkten, insbesondere komplexen Anlagen, beispielsweise der Metallbearbeitung, wie Walzwerken oder bei Systemen mit komplexen elektronischen Komponenten zum Einsatz kommen. Bei fest installierten Produkten wie Anlagen erfolgt die Betreuung mit Hilfe einer mobilen Servicestation, welche eine oder mehrere geeignete Benutzerschnittstellen 5 aufweist. Die Arbeitsweise ist die gleiche wie sie im Ausführungsbeispiel der Figur erläutert wurde.

### Bezugszeichenliste:

- 1: Datenbank
- 2: Datenfile
- 3: Archivspeicher
- 4: Server
- 5: Benutzerschnittstelle
- 6: Servicestation
- 7: Produkt
- 8: Umsetzer

## Patentansprüche

1. Verfahren zur Bereitstellung produktspezifischer Daten in einer Servicestation zur Erkennung und etwaigen Änderung von Bau- und Funktionszuständen an von einem Hersteller ausgelieferten Produkten, **gekennzeichnet durch**
- eine zentrale Speicherung und Bereitstellung von Ausstattungsdaten für Produktkomponenten aller Produkttypen und deren unterschiedlichen Varianten in einer zentralen Datenbank, wobei die Ausstattungsdaten **durch** den Hersteller aktualisiert werden;
- Archivierung der individuellen Ausstattungsdaten des jeweils ausgelieferten Produkts in einem eigenen, mittels eines dem Produkt zugeordneten Identifizierungscodes abrufbaren Datenfile in einem Archivspeicher, wobei
- mittels eines rechnergestützt ablaufenden Programms, das zwischen der zentralen Datenbank und dem Archivspeicher kommuniziert, neue oder geänderte Datenfiles erzeugt und im Archivspeicher abgelegt werden,
- Abrufen des dem jeweils zu betreuenden Produkt zugeordneten Datenfiles aus dem Archivspeicher mittels wenigstens einer in einer Servicestation vorhandenen Benutzerschnittstelle und Erkennen des Ist-Zustands des Produktes; und
- etwaige Änderungen am Produkt.

2. Verfahren nach Anspruch 1, **dadurch gekennzeichnet, dass** bei der Betreuung des Produktes das zugehörige Datenfile (2) aus dem Archivspeicher (3) in einen Speicher der Benutzerschnittstelle geladen wird.

3. Verfahren nach Anspruch 1 bis 2, **dadurch gekennzeichnet, dass** als Ausstattungsdaten Angaben zur Hardware, Software und zu individuellen Einstellungen von Produktkomponenten in fortlaufenden Datenfile-Versionen für jedes Produkt dokumentiert werden.

4. Verfahren nach einem der Ansprüche 1 bis 3, **dadurch gekennzeichnet, dass** die Ausstattungsdaten durch vom Hersteller geprüfte und für den Serieneinsatz freigegebene Änderungen an den Produktkomponenten aktualisiert werden.

5. Verfahren nach einem der Ansprüche 1 bis 4, **dadurch gekennzeichnet, dass** zwischen dem Produkt und der Benutzerschnittstelle mittels Datenübertragungstechnik eine Verbindung hergestellt wird.

6. Verfahren nach einem der Ansprüche 1 bis 5, **dadurch gekennzeichnet, dass** mit dem rechnergestützt ablaufenden Programm einerseits bei der Herstellung des Produktes für die Erstellung des jeweiligen Datenfiles in Abhängigkeit vom Montageauftrag und die daraus folgende Fertigungssteuerung auf die in der zentralen Datenbank gespeicherten aktualisierten Ausstattungsdaten zugegriffen wird und andererseits bei der Betreuung des Produktes in der Servicestation für die Produktänderungen nur die in der zentralen Datenbank gespeicherten aktualisierten Ausstattungsdaten zur Verfügung gestellt werden.

7. Verfahren nach einem der Ansprüche 1 bis 6, **dadurch gekennzeichnet, dass** mit dem oder den für jedes Produkt im Archivspeicher gespeicherten Datenfile(s) während der gesamten Lebensdauer des zugeordneten Produktes der jeweilige Bau- und Funktionalitätszustand des Produktes dokumentiert wird.

8. Verfahren nach einem der Ansprüche 1 bis 7, **dadurch gekennzeichnet, dass** mit im Archivspeicher (3) gespeicherten Datenfile-Versionen (2) der zeitliche Ablauf der Änderungen am jeweiligen Produkt angegeben wird.

9. Verfahren nach einem der Ansprüche 1 bis 8, **dadurch gekennzeichnet, dass** die Schnittstelle (5) einen Änderungswunsch im Archivspeicher (3) ablegen kann.

10. Verfahren nach Anspruch 9, **dadurch gekennzeichnet, dass** der Archivspeicher (3) einen ihm durch die Schnittstelle (5) übermittelten Änderungswunsch an das Programm (4) zur Ausführung weiterleitet.

11. Verfahren nach Anspruch 10, **dadurch gekennzeichnet, dass** der zum Programm (4) weitergeleitete Änderungswunsch vom Programm so weiterverarbeitet wird, dass ein entsprechend neues Datenfile (2) generiert und im Archivspeicher (3) abgelegt wird.

12. System zur Bereitstellung produktspezifischer Daten in einer Servicestation zur Erkennung und etwaigen Änderung von Bau- und Funktionszuständen, **gekennzeichnet durch**
- eine zentrale Datenbank (1) zur Speicherung und Bereitstellung von Ausstattungsdaten für Produktkomponenten aller Produkttypen und deren unterschiedlichen Varianten, wobei die Ausstattungsdaten **durch** den Hersteller aktualisiert sind;
- einen Archivspeicher (3), in dem für jedes ausgelieferte Produkt ein eigenes, mittels eines ihm zugeordneten Identifizierungscodes abrufbares Datenfile (2) archiviert ist, das die individuellen Ausstattungsdaten des jeweils ausgelieferten Produktes (7) enthält;
- ein rechnergestützt ablaufendes Programm (4), welches zum Erzeugen neuer und/oder geänderter Datenfiles und deren Ablegen im Archivspeicher (3) mit der zentralen Datenbank (1) und dem Archivspeicher (3) kommuniziert;
- wenigstens eine in einer Servicestation (6) vorhandene Benutzerschnittstelle (5), mit der ein Abrufen des dem jeweiligen Produkt (7) zugeordneten Datenfiles (2) aus dem Archivspeicher (3) und ein Erkennen des Ist-Zustandes eines zu betreuenden Produktes (7) für etwaige Änderungen am Produkt (7) durchführbar sind.

13. System nach Anspruch 12, **dadurch gekennzeichnet, dass** bei der Betreuung des Produktes (7) das zugehörige Datenfile (2) aus dem Archivspeicher (3) in einen Speicher der Benutzerschnittstelle (5) ladbar ist.

14. System nach Anspruch 12 oder 13, **dadurch gekennzeichnet, dass** die Ausstattungsdaten des Produktes (7) Angaben zur Hardware, Software und zu individuellen Einstellungen von Produktkomponenten enthalten.

15. System nach einem der Ansprüche 12 bis 14, **dadurch gekennzeichnet, dass** die aktualisierten Ausstattungsdaten der Produkte (7) vom Hersteller geprüfte und für den Serieneinsatz freigegebene Ausstattungsvarianten der Produktkomponenten beinhalten.

16. System nach einem der Ansprüche 12 bis 15, **dadurch gekennzeichnet, dass** das zu betreuende Produkt über einen Umsetzer (8) für die Datenübertragung an die Schnittstelle (5) anschließbar ist.

17. System nach einem der Ansprüche 12 bis 16, **dadurch gekennzeichnet, dass** das rechnergestützt ablaufende Programm (4) Zugriff auf die in der zentralen Datenbank (1) gespeicherten aktualisierten Ausstattungsdaten hat und einerseits bei der Herstellung des Produktes die Erstellung des jeweiligen Datenfiles (2) in Abhängigkeit vom Montageauftrag und die daraus folgende Fertigungssteuerung koordiniert und andererseits bei der Betreuung des Produktes in der Servicestation (6) für etwaige Produktänderungen nur die in der zentralen Datenbank (1) gespeicherten aktualisierten Ausstattungsdaten zur Verfügung stellt.

18. System nach einem der Ansprüche 12 bis 17, **dadurch gekennzeichnet, dass** das oder die jeweils im Archivspeicher (3) gespeicherte(n) Datenfile(s) (2) während der gesamten Lebensdauer des zugeordneten Produktes (7) den jeweiligen Bau- und Funktionalitätszustand des Produktes angibt.

19. System nach einem der Ansprüche 12 bis 18, **dadurch gekennzeichnet, dass** im Archivspeicher (3) gespeicherte Datenfile-Versionen (2₍₁₋ₙ₎) den zeitlichen Ablauf der Änderungen am jeweiligen Produkt (7) wiedergeben.

20. System nach einem der Ansprüche 12 bis 19, **dadurch gekennzeichnet, dass** das Produkt (7) eine komplexe Anlage wie z.B. Walzwerk oder Fahrzeug, insbesondere Nutzfahrzeug oder Gerätschaft oder Einrichtung mit komplexen elektronischen Komponenten ist.
